# EUROPÄISCHE PATENTSCHRIFT

(11) **EP 3 473 749 B1**
(45) Veröffentlichungstag und Bekanntmachung des Hinweises auf die Patenterteilung: **15.06.2022**
(21) Anmeldenummer: 18199775.0
(22) Anmeldetag: 11.10.2018
(51) Int. Cl.: C23C 24/10, B23K 26/342, F16J 15/34

(54) **VERFAHREN ZUM AUFBRINGEN EINER SCHICHT AUF EIN BAUTEIL UND BAUTEIL HERGESTELLT NACH DEM VERFAHREN**
METHOD OF APPLYING A COATING TO A COMPONENT AND COMPONENT PRODUCED ACCORDING TO THE METHOD
PROCÉDÉ D'APPLICATION D'UNE COUCHE SUR UN COMPOSANT ET COMPOSANT FABRIQUÉ SELON LEDIT PROCÉDÉ

(30) Priorität: 18.10.2017 DE 102017218580
(43) Veröffentlichungstag der Anmeldung: 24.04.2019
(73) Patentinhaber: Christian Maier GmbH & Co. KG Maschinenfabrik, 89520 Heidenheim (DE)
(72) Erfinder: MAIER, Florian, 73433 Aalen (DE); SCHWENK, Günther, 89520 Heidenheim (DE)
(74) Vertreter: Dr. Weitzel & Partner

(56) Entgegenhaltungen:
- EP-A2- 0 246 003
- CN-U- 202 180 081
- US-A- 4 898 785
- CHANG C ET AL: "Micro-scale mechanical characterization of Inconel cermet coatings deposited by laser cladding", BOLETIN DE LA SOCIEDAD ESPANOLA DE CERAMICA Y VIDRIO, Bd. 55, Nr. 4, 23. Januar 2016 (2016-01-23), Seiten 136-142, XP055530813, Elsevier [NL] ISSN: 0366-3175, DOI: 10.1016/j.bsecv.2016.01.001
- SCHOPPHOVEN T ET AL: "EHLA: Extreme High-Speed Laser Material Deposition", LASER TECHNIK JOURNAL, Bd. 14, Nr. 4, 16. Juni 2017 (2017-06-16), Seiten 26-29, XP055530213, Wiley-VCH-Verlag, Weinheim [DE] ISSN: 1613-7728, DOI: 10.1002/latj.201700020
- MALINAUSKAS M ET AL: "Ultrafast laser processing of materials: from science to industry", LIGHT: SCIENCE & APPLICATIONS, Bd. 5, Nr. 8, 14. März 2016 (2016-03-14), Seiten 1-14, XP055530724, DOI: 10.1038/lsa.2016.133

## Beschreibung

Die vorliegende Erfindung betrifft ein Verfahren zum Aufbringen einer Schicht auf ein Bauteil im Einzelnen gemäß dem Oberbegriff von Anspruch 1.

Es ist bekannt, dass Bauteile aus einem Eisenwerkstoff dadurch mit einer Oberfläche mit großer Härte und sehr guten Gleiteigenschaften versehen werden können, dass sie mit einer Chromoxid-Beschichtung versehen werden. Das Auftragen der Chromoxid-Schicht erfolgt durch Plasmaspritzen, bei welchem durch Ionisation eines Gases oder Gasgemisches und einem zwischen Kathode und Anode brennenden Lichtbogen große Energiemengen in Form eines Plasmastrahls freigesetzt werden, welche zum Aufschmelzen der Chromoxid-Schicht verwendet werden. Als Ergebnis erhält man eine hochwertige und sehr verschleißfeste Beschichtung, die beispielsweise für Bauteile in Gleitringdichtungen verwendet werden kann.

US 2016/0047254 A1 offenbart ein Verfahren zum Aufbringen einer Beschichtung auf ein Substrat, wobei auf das Substrat eine poröse Matrix aufgebracht ist und ein Imprägniermaterial auf die poröse Matrix oder in die poröse Matrix-eingebracht wird. Hierfür wird Energie aus einer Energiequelle, beispielsweise mittels eines Lasers, auf das Imprägniermaterial und einen Bereich des Substrats übertragen, sodass die Imprägnierschicht und das Substrat an seiner Oberfläche aufgeschmolzen werden, nicht jedoch die poröse Matrix. Die poröse Matrix kann Chromoxid umfassen. Ferner kann eine äußere Schutzschicht aufgebracht werden, die Chromoxid umfasst, wobei die Schutzschicht beispielsweise in Form eines Pulvers aufgebracht wird und ebenfalls mit Energie aus der Energiequelle aufgeschmolzen wird. Weil das Substrat zum Aufbringen der Imprägnierschicht an seiner Oberfläche aufgeschmolzen werden muss, sind für das Substrat nur bestimmte Werkstoffe, die temperaturbeständig sind, verwendbar.

DE 101 51 716 A1 offenbart das Aufbringen eines ein Silizium sowie Titan umfassenden Legierungspulvers auf Aluminiumbasis auf ein aus einer AluminiumLegierung bestehendes Bauteil. Dem Legierungspulver kann ein vergleichsweise geringer Anteil Chromdioxid beigemischt werden.

DE 10 2015 118 441 A1 offenbart Verbundmaterialien, die eine Metalllegierung und eine Flussmittelzusammensetzung umfassen. Die Metalllegierung kann eine Superlegierung sein und ein Volumenverhältnis der Flussmittelzusammensetzung zur Metalllegierung kann im Bereich von ungefähr 30:70 bis ungefähr 70:30 liegen. Die Verbundmaterialien können in Form von Teilchen vorliegen, die einen Kern umfassen, der von einer metallischen Schicht umgeben ist, wobei der Kern die Flussmittelzusammensetzung umfasst und die metallische Schicht die Metalllegierung umfasst. Die Verbundmaterialien können auch in Form von verschmolzenen Materialien vorliegen, wobei die Metalllegierung und die Flussmittelzusammensetzung zufällig verteilt und zufällig orientiert sind. Die Verbundmaterialien können durch Laserauftragsschweißen auf ein Substrat aufgebracht werden.

US 6 410 470 B1 offenbart eine herkömmliche Chromoxid-Beschichtung, die durch thermisches Spritzen aufgebracht wird.

US 2016/0368096 A1 beschreibt ein Verfahren zum Herstellen eines Instrumentes, insbesondere im Zahntechnik- oder Medizinbereich, wobei ein Rohling mit abrasiven Partikeln beschichtet wird, die mittels eines Lasers aufgeschmolzen werden.

DE 22 01 664 C2 offenbart Plasmaspritzen auf einen Metallträgerring oder einen Aluminiumring bei einer Gleitringdichtung.

Gemäß EP 0 246 003 A2 wird eine keramische Schicht mit Chromoxid auf ein Bauteil aufgebracht. Dabei soll ein hoher Temperatureintrag in das Bauteil vermieden werden.

Hierfür wird die Schicht mit herkömmlichen Verfahren aufgebracht, beispielweise Plasmaspritzen, und anschließend mit einem Laser auf der Bauteiloberfläche aufgeschmolzen.

Nachteilig bei dem bekannten Verfahren beziehungsweise bei den bekannten Bauteilen ist, dass durch das Einbringen der großen Energiemengen in das Bauteil beim Beschichten der Grundkörper des Bauteils, das sogenannte Substrat, das beschichtet werden soll, hochtemperaturbeständig sein muss, sodass die Anwendung im Wesentlichen auf Eisenwerkstoffe beschränkt ist.

Der vorliegenden Erfindung liegt daher die Aufgabe zugrunde, ein Verfahren zum Aufbringen einer chromoxidhaltigen Schicht auf ein Bauteil anzugeben, welches den genannten Nachteil vermeiden und auch bei Nichteisenmetallen die Herstellung einer Schicht mit hoher Härte und guten Gleiteigenschaften ermöglichen.

Die erfindungsgemäße Aufgabe wird durch ein Verfahren gemäß Patentanspruch 1 gelöst. In den abhängigen Patentansprüchen werden vorteilhafte und besonders zweckmäßige Ausgestaltungen der Erfindung angegeben.

Gemäß dem erfindungsgemäßen Verfahren wird eine Schicht, die Chromoxid umfasst, auf ein Bauteil aufgebracht, und zwar durch Laserauftragsschweißen. Somit kann die chromoxidhaltige Schicht auf wenigstens eine nahezu beliebig geformte Oberfläche des Bauteils aufgebracht werden, ohne einen Temperatureintrag in das Bauteil, der das Bauteil schädigen könnte oder eine unerwünschte Kristallstrukturänderung des Bauteils bewirken könnte. Somit kann als Substrat des Bauteils auch ein Nichteisenmetallwerkstoff, beispielsweise ein Aluminiumwerkstoff, Magnesiumwerkstoff oder Titanwerkstoff verwendet werden, d.h. ein Werkstoff aus AI, Mg, Ti beziehungsweise eine AI-Legierung, Mg-Legierung oder Ti-Legierung.

Das erfindungsgemäße Aufbringen der Schicht mit oder aus Chromoxid auf ein Bauteil erfolgt insbesondere ohne Aufschmelzen der Oberfläche des Bauteils, auf welche die Schicht aufgebracht wird. Dies schließt eine gewisse Erwärmung der Oberfläche nicht aus, jedoch findet noch keine Verflüssigung oder insbesondere keine das Gefüge der Oberfläche verändernde Erwärmung statt. In anderen Worten wird beim Aufbringen der Schicht auf die Oberfläche das Material der Oberfläche beziehungsweise des Bauteils in einem vollständig erstarrten Zustand gehalten. Es ist auch nicht notwendig, dass eine Zwischenstruktur oder Zwischenschicht, wie beispielsweise eine poröse Matrix, zwischen der Chromoxidschicht und dem Bauteil vorgesehen wird. Vielmehr kann die Chromoxidschicht unmittelbar auf das Bauteil aufgebracht werden.

Gemäß einer anderen Ausführungsform kann jedoch ein Aufschmelzen der Oberfläche des Bauteils gezielt genutzt werden, um die Schicht noch inniger mit dem Bauteil zu verbinden.

Beim Aufbringen der Schicht auf das Bauteil kann mit dem Laser ein Schmelzbad auf der Bauteiloberfläche erzeugt werden, wobei als Laser insbesondere ein Picosekundenlaser verwendet wird, der eine Impulsdauer zwischen 10⁻⁹ und 12⁻⁹ Sekunden (s) aufweist. In dieses Schmelzbad kann dann das Chromoxid, insbesondere mit einem oder mehreren Additiven, wie beispielsweise einem Bindematerial und/oder einem Gleitwerkstoff eingebracht werden, insbesondere in Pulverform.

Dabei kann gemäß einer Ausführungsform der Erfindung mit dem Laser nur das Schmelzbad erzeugt werden, in welches dann das Pulver oder ein entsprechendes Pulvergemisch ohne vorherige Erhitzung durch den Laser eingebracht wird. Gemäß einer alternativen Ausführungsform wird neben der Erzeugung des Schmelzbades auf der Bauteiloberfläche mit dem Laser das Pulver auf dem Weg zur Bauteiloberfläche erhitzt, insbesondere bis nahe an den Schmelzpunkt, und das erhitzte Pulver beziehungsweise Pulvergemisch wird dann dem Schmelzbad zugeführt. Ein solches Verfahren wird auch als extremes Hochgeschwindigkeits-Laser-Auftragsschweißen (EHLA) bezeichnet.

Als Chromoxid wird insbesondere Chrom(III)-oxid verwendet, mit der chemischen Strukturformel O₂O₃.

Erfindungsgemäß weist das Chromoxid einen Reinheitsgrad von wenigstens 95% oder 99% auf. Bevorzugt wird ausschließlich Chromoxid durch das Laserauftragsschweißen auf die wenigstens eine Oberfläche des Bauteils aufgebracht, das heißt die Schmelze enthält bis auf nicht vermeidbare Verunreinigungen keine weiteren Bestandteile. Gemäß einer alternativen Ausführungsform wird Chromoxid mit dem genannten Reinheitsgrad verwendet, jedoch werden dem Chromoxid andere Materialien, insbesondere ein einziges anderes Material, beigemischt, insgesamt in einer Menge von weniger als 30 Gew.-%, insbesondere von weniger als 20 Gew.-%. Beispielsweise ist ein solches anderes Material ein Bindematerial.

Beispielsweise beträgt der Anteil von SiO₂, TiO₂, Fe₂O₃, MgO, CaO, Al₂O₃ und metallischem Chrom (Cr met) jeweils weniger als ein 1 Gew.-%, insbesondere weniger als 0,1 Gew.-%.

Insbesondere weist die Schicht nach dem Aufbringen auf dem Bauteil eine Härte von wenigstens 800 HV (800 HV 10), vorteilhaft wenigstens 1000 HV (1000 HV 10) oder insbesondere von wenigstens 1200 HV (1200 HV 10) auf.

Gemäß einer Ausführungsform des erfindungsgemäßen Verfahrens wird als Schichtwerkstoff zusätzlich zu dem Chromoxid, das dann insbesondere in dem genannten Reinheitsgrad vorliegen kann, ein Bindematerial der Bauteiloberfläche zugeführt, wobei das Bindematerial beispielsweise Nickel, Cobalt und/oder Aluminium umfasst, letzteres insbesondere in Form von Al₂O₃. Mit einem solchen Bindematerial, auch Matrixmaterial genannt, kann die Bindung des Chromoxids an den Grundwerkstoff, d.h. das Substrat, verbessert werden. Bevorzugt wird durch eine geeignete Auswahl und Zusammensetzung des Bindematerials auch eine gewünschte Härte und/oder Gleiteigenschaften der fertigen Oberflächenbeschichtung eingestellt.

Besonders bevorzugt wird eine Nickel-Basis-Legierung als Bindematerial zusammen mit dem Chromoxid der Bauteiloberfläche zugeführt. Beispielsweise kann INCONEL^{®} 718 als Bindematerial verwendet werden.

Gemäß einer Ausführungsform der Erfindung werden das Chromoxid, insbesondere Cr₂O₃ und das Bindematerial in Form einer Pulvermischung der Bauteiloberfläche beziehungsweise dem dort mit dem Laser erzeugten Schmelzbad zugeführt. Dabei kann aus dem Chromoxid und dem Bindematerial zunächst eine Pulvermischung hergestellt werden, die dann aus einem gemeinsamen Behälter der Bauteiloberfläche beziehungsweise dem Schmelzbad zugeführt wird. Alternativ können das Chromoxid und das Bindematerial jeweils in Pulverform in verschiedenen Behältern vorgesehen sein und dann gleichzeitig aus dem jeweiligen Behälter der Bauteiloberfläche beziehungsweise dem Schmelzbad zugeführt werden.

Bevorzugt weist das Chromoxid in der Pulverform eine Korngröße zwischen 10 µm und 100 µm auf. Besonders bevorzugt wird dabei die Korngröße in Abhängigkeit der Parameter des Laserauftragsschweißens und/oder der Art des Laserauftragsschweißverfahrens ausgewählt. Beispielsweise wird, wenn auf der Bauteiloberfläche mit dem Laser ein Schmelzbad erzeugt wird, in welches das Chromoxid oder das Chromoxid und das Bindematerial in noch nicht durch den Laser erhitztem Zustand in Pulverform eingebracht wird, eine Korngröße des Chromoxids in der Pulverform von wenigstens 20 µm, insbesondere von wenigstens 40 µm gewählt. Wenn hingegen das Chromoxidpulver beziehungsweise das Chromoxidpulver und das Bindematerialpulver, gegebenenfalls in einer gemeinsamen Pulvermischung, vor dem Zuführen auf die Bauteiloberfläche beziehungsweise in das Schmelzbad mittels dem Laser aufgeheizt werden, so kann gemäß einer Ausführungsform der Erfindung eine Korngröße des Chromoxids in der Pulverform von bis zu 40 µm, insbesondere von bis zu 25 µm gewählt werden.

Gemäß einer Ausführungsform der Erfindung wird ein Kunststoff mit der chromoxidhaltigen Schicht durch Laserauftragsschweißen beschichtet.

Bei dem beschichteten Bauteil kann es sich gemäß einer Ausführungsform der Erfindung um einen Gleitring einer Gleitringdichtung handeln oder um einen Gegenring, an welchem der Gleitring einer Gleitringdichtung gleitet.

Die Erfindung ist jedoch auch bei anderen Bauteilen anwendbar, insbesondere bei Bauteilen der Luft- und/oder Raumfahrt, Energieerzeugung oder Energieumwandlung, Petrochemie, Automobilbau und/oder Medizintechnik.

Durch das erfindungsgemäße Verfahren können auch besonders leichte Bauteile, die herkömmlich nicht mit einer Chromoxidschicht versehen werden konnten, mit den Vorteilen der Chromoxidschicht ausgestattet werden, insbesondere mit einer besonders großen Härte und sehr guten Gleiteigenschaften. Die Schicht weist dann bevorzugt die zuvor genannten Werkstoffeigenschaften auf, insbesondere die Härte im angegebenen Bereich.

Die Erfindung soll nachfolgend anhand eines Ausführungsbeispiels und der Figur exemplarisch beschrieben werden.

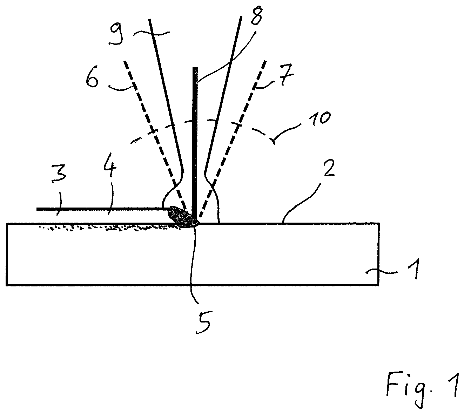

In der Fig. 1 ist ein Bauteil 1 exemplarisch dargestellt, das an seiner Oberfläche 2 mit einer Schicht 3, die Chromoxid umfasst, beschichtet wird.

Die Schicht 3 wird beispielsweise dadurch flächig auf der Oberfläche 2 hergestellt, dass einzelne Schweißraupen 4 nacheinander und aneinander anliegend entlang der Oberfläche 2 gezogen werden.

Zum Erzeugen der Schweißraupen 4 beziehungsweise der Schicht 3 wird ein Schmelzbad 5 auf der Oberfläche 2 des Bauteils 1 erzeugt, in welches zumindest das Chromoxid in Form eines Chromoxidpulverstrahls 6 gegeben wird, wodurch das Chromoxidpulver auf die Oberfläche 2 und an den bereits erzeugten Teil der Schicht 3 angeschmolzen wird. Bei dem Chromoxidpulverstrahl 6 kann es sich um den Strahl einer Pulvermischung handeln, die neben dem Chromoxid andere Additive, beispielsweise wenigstens ein Bindematerial und/oder wenigstens einen Gleitstoff umfasst. Zusätzlich oder alternativ kann dem Schmelzbad 5 ein weiterer Pulverstrahl mit wenigstens einem Additiv, insbesondere wenigstens einem Bindematerial und/oder Gleitstoff zugeführt werden, hier dargestellt anhand des Bindematerialpulverstrahls 7.

Das Schmelzbad 5 wird durch Bestrahlen der Oberfläche 2 und insbesondere des Endbereichs der Schweißraupe 4 mit einem Laser 8 erzeugt, bei welchem es sich insbesondere um einen gepulsten Laser handelt. Ferner kann, um eine besonders effiziente Verwertung des Schichtmaterial beziehungsweise des Pulvers sicherzustellen, ein Schutzgas 9 auf das Schmelzbad 5 geleitet werden, um eine Schutzgasatmosphäre über dem Schmelzbad 5 auszubilden.

Der Laser 8, der oder die Pulverstrahl(en) 6, 7 und gegebenenfalls das Schutzgas 9 können insbesondere mittels einer gemeinsamen Düse 10 auf die Oberfläche 2 des Bauteils 1 geleitet werden. Es können jedoch auch mehrere einzelne zusammenarbeitende Düsen 10 vorgesehen sein.

### Bezugszeichenliste:

- 1: Bauteil
- 2: Oberfläche
- 3: Schicht
- 4: Schweißraupe
- 5: Schmelzbad
- 6: Chromoxidpulverstrahl
- 7: Bindemittelpulverstrahl
- 8: Laser
- 9: Schutzgas
- 10: Düse

## Patentansprüche

1. Verfahren zum Aufbringen einer Schicht (3) auf ein Bauteil (1), wobei die Schicht Chromoxid umfasst,
**dadurch gekennzeichnet, dass**
die Schicht (3) durch Laserauftragsschweißen von Chromoxid mit einem Reinheitsgrad von wenigstens 95% oder 99% auf die wenigstens eine Oberfläche (2) des Bauteils (1) aufgebracht wird.

2. Verfahren gemäß Anspruch 1, **dadurch gekennzeichnet, dass** das Chromoxid in Pulverform zugeführt und mittels eines Lasers (8) auf der Bauteiloberfläche (2) und/oder beim Zuführen auf die Bauteiloberfläche (2) geschmolzen wird.

3. Verfahren gemäß einem der Ansprüche 1 oder 2, **dadurch gekennzeichnet, dass** als Chromoxid Chrom(III)-oxid der Bauteiloberfläche (2) zugeführt wird.

4. Verfahren gemäß einem der Ansprüche 1 bis 3, **dadurch gekennzeichnet, dass** die Schicht (3) ausschließlich durch das Chromoxid mit einem Reinheitsgrad von wenigstens 95% oder 99% gebildet wird und nur Chromoxid der Bauteiloberfläche (2) beim Laserauftragsschweißen zugeführt wird.

5. Verfahren gemäß einem der Ansprüche 1 bis 3, **dadurch gekennzeichnet, dass** als Schichtwerkstoff zusätzlich zu Chromoxid ein Bindematerial der Bauteiloberfläche (2) zugeführt wird, wobei das Bindematerial Nickel, Cobalt und/oder Aluminium umfasst, und wobei insbesonders als Bindematerial eine Nickel-Basis-Legierung verwendet wird, insbesondere INCONEL^{®} 718.

6. Verfahren gemäß Anspruch 2 und Anspruch 5, **dadurch gekennzeichnet, dass** das Chromoxid und das Bindematerial in Form einer Pulvermischung der Bauteiloberfläche (2) zugeführt werden, wobei aus dem Chromoxid und dem Bindematerial zunächst eine Pulvermischung hergestellt wird, die aus einem gemeinsamen Behälter der Bauteiloberfläche (2) zugeführt wird, oder Chromoxid und das Bindematerial jeweils in Pulverform der Bauteiloberfläche (2) gleichzeitig aus verschiedenen Behältern zugeführt werden.

7. Verfahren gemäß einem der Ansprüche 1 bis 6, **dadurch gekennzeichnet, dass** die Oberfläche (2) des Bauteils (1) beim Laserauftragsschweißen der Schicht (3) in vollständig erstarrtem Zustand gehalten wird.

8. Verfahren gemäß einem der Ansprüche 2 bis 7, **dadurch gekennzeichnet, dass** das Chromoxid in Pulverform mit einer Korngröße zwischen 10 µm und 100 µm der Bauteiloberfläche (2) zugeführt wird.

9. Verfahren gemäß Anspruch 8, **dadurch gekennzeichnet, dass** auf der Bauteiloberfläche (2) mit dem Laser (8) ein Schmelzbad (5) erzeugt wird, in welches das Chromoxid oder das Chromoxid und das Bindematerial in noch nicht durch den Laser (8) erhitztem Zustand in Pulverform eingebracht wird, wobei das Chromoxid in der Pulverform eine Korngröße von wenigstens 20 µm, insbesondere von wenigstens 40 µm aufweist.

10. Verfahren gemäß Anspruch 8, **dadurch gekennzeichnet, dass** auf der Bauteiloberfläche (2) mit dem Laser (8) ein Schmelzbad (5) erzeugt wird und mit dem Laser (8) das Chromoxid oder das Chromoxid und das Bindematerial in der Pulverform noch oberhalb der Bauteiloberfläche (2) erhitzt wird und anschließend in das Schmelzbad (5) eingebracht wird, wobei das Chromoxid in der Pulverform insbesondere eine Korngröße von bis zu 40 µm, insbesondere von bis zu 25 µm aufweist.

11. Verfahren gemäß einem der Ansprüche 1 bis 10, **dadurch gekennzeichnet, dass** dem Chromoxid beim Zuführen zur Bauteiloberfläche (2) oder vorher Zusatzstoffe, insbesondere Gleitstoffe zugeführt werden, insbesondere mit einem Anteil von weniger als 5 Gew.-% oder weniger als 1 Gew.-%.

12. Verfahren gemäß einem der Ansprüche 1 bis 11, **dadurch gekennzeichnet, dass** das Bauteil (1) aus einem Nichteisenmetall hergestellt ist, insbesondere aus einem Aluminium-, Magnesium- und/oder Titanwerkstoff.

13. Verfahren gemäß einem der Ansprüche 1 bis 11, **dadurch gekennzeichnet, dass** das Bauteil (1) aus einem Kunststoff hergestellt ist.

14. Verfahren gemäß einem der Ansprüche 1 bis 6 oder 8 bis 13, wenn diese nicht auf den Anspruch 7 rückbezogen sind, **dadurch gekennzeichnet, dass** mit einem Picosekundenlaser, der eine Impulsdauer zwischen 10⁻⁹ s und 10⁻¹² s aufweist, ein Schmelzbad (5) auf der Bauteiloberfläche (2) erzeugt wird, in welches das Chromoxid eingebracht wird.

## Claims

1. Method for applying a layer (3) to a component (1), wherein the layer comprises chromium oxide,
**characterized in that**
the layer (3) is applied to the at least one surface (2) of the component (1) by laser deposition welding of chromium oxide with a degree of purity of at least 95% or 99%.

2. Method according to claim 1, **characterized in that** the chromium oxide is supplied in powder form and is melted by means of a laser (8) on the component surface (2) and/or during supply to the component surface (2).

3. Method according to one of claims 1 or 2, **characterized in that** chromium(III) oxide is supplied to the component surface (2) as chromium oxide.

4. Method according to one of claims 1 to 3, **characterized in that** the layer (3) is formed exclusively by the chromium oxide with a degree of purity of at least 95% or 99% and only chromium oxide is supplied to the component surface (2) during laser deposition welding.

5. Method according to one of claims 1 to 3, **characterized in that**, in addition to chromium oxide, a binder material is supplied to the component surface (2) as coating material, wherein the binder material comprises nickel, cobalt and/or aluminum, and wherein in particular a nickel-based alloy is used as binder material, in particular INCONEL^{®} 718.

6. Method according to claim 2 and claim 5, **characterized in that** the chromium oxide and the binder material are supplied to the component surface (2) in the form of a powder mixture, wherein a powder mixture is first produced from the chromium oxide and the binder material, which is supplied to the component surface (2) from a common container, or chromium oxide and the binder material are each supplied in powder form to the component surface (2) simultaneously from different containers.

7. Method according to one of claims 1 to 6, **characterized in that** the surface (2) of the component (1) is kept in a completely solidified state during laser deposition welding of the layer (3).

8. Method according to one of claims 2 to 7, **characterized in that** the chromium oxide is supplied to the component surface (2) in powder form with a grain size between 10 µm and 100 µm.

9. Method according to claim 8, **characterized in that** a melt pool (5) is generated on the component surface (2) by means of the laser (8), into which melt pool (5) the chromium oxide or the chromium oxide and the binder material are introduced in powder form in a state not yet heated by the laser (8), wherein the chromium oxide in the powder form has a grain size of at least 20 µm, in particular of at least 40 µm.

10. Method according to claim 8, **characterized in that** a melt pool (5) is generated on the component surface (2) by means of the laser (8), and the chromium oxide or the chromium oxide and the binder material in powder form are heated by means of the laser (8) while still above the component surface (2) and are subsequently introduced into the melt pool (5), wherein the chromium oxide in powder form has in particular a particle size of up to 40 µm, in particular of up to 25 µm.

11. Method according to one of claims 1 to 10, **characterized in that** additives, in particular lubricants, are added to the chromium oxide when it is fed to the component surface (2) or beforehand, in particular in a proportion of less than 5% by weight or less than 1 % by weight.

12. Method according to one of claims 1 to 11, **characterized in that** the component (1) is made from a non-ferrous metal, in particular from an aluminum, magnesium and/or titanium material.

13. Method according to one of claims 1 to 11, **characterized in that** the component (1) is made of a plastic.

14. Method according to one of claims 1 to 6 or 8 to 13, if these are not referred back to claim 7, **characterized in that** a picosecond laser having a pulse duration between 10⁻⁹ s and 10⁻¹² s is used to generate a melt pool (5) on the component surface (2), into which the chromium oxide is introduced.

## Revendications

1. Procédé pour appliquer une couche (3) sur une pièce (1), dans lequel la couche contient de l'oxyde de chrome, **caractérisé en ce que** la couche (3) est appliqué par rechargement de soudage au laser d'oxyde de chrome d'une pureté d'au moins 95 % ou 99 % sur l'au moins une surface (2) de la pièce (1).

2. Procédé selon la revendication 1, **caractérisé en ce que** l'oxyde de chrome est amené sous forme de poudre et fondu au moyen d'un laser (8) sur la surface de la pièce (2) et/ou lors de son apport sur la surface de la pièce (2).

3. Procédé selon l'une des revendications 1 ou 2, **caractérisé en ce que** l'oxyde de chrome amené à la surface de la pièce (2) est de l'oxyde de chrome trivalent.

4. Procédé selon l'une des revendications 1 à 3, **caractérisé en ce que** la couche (3) est exclusivement formée par l'oxyde de chrome d'une pureté d'au moins 95 % ou 99 % et seul l'oxyde de chrome est amené à la surface de la pièce (2) lors du rechargement de soudage au laser.

5. Procédé selon l'une des revendications 1 à 3, **caractérisé en ce qu'**un liant est amené comme matériau de couche, en plus de l'oxyde de chrome, à la surface de la pièce (2), le liant contenant du nickel, du cobalt et/ou de l'aluminium et un alliage à base de nickel, en particulier de l'INCONEL^{®} 718, étant en particulier utilisé comme liant.

6. Procédé selon la revendication 2 et la revendication 5, **caractérisé en ce que** l'oxyde de chrome et le liant sont amenés à la surface de la pièce (2) sous la forme d'une poudre mélangée, la poudre mélangée étant d'abord produite avec l'oxyde de chrome et le liant et amenée à la surface de la pièce (2) à partir d'un réservoir commun, ou bien l'oxyde de chrome et le liant étant amenés chacun en poudre à la surface de la pièce (2) en même temps à partir de réservoirs différents.

7. Procédé selon l'une des revendications 1 à 6, **caractérisé en ce que** la surface (2) de la pièce (1) est maintenue dans un état complètement solidifié lors du rechargement par soudage au laser de la couche (3).

8. Procédé selon l'une des revendications 2 à 7, **caractérisé en ce que** l'oxyde de chrome est amené à la surface de la pièce (2) sous forme de poudre d'une grosseur de grains comprise entre 10 µm et 100 µm.

9. Procédé selon la revendication 8, **caractérisé en ce qu'**est formé sur la surface de la pièce (2) à l'aide du laser (8) un bain de fusion (5) dans lequel l'oxyde de chrome ou l'oxyde de chrome et le liant sont amenés en poudre dans un état non encore chauffé par le laser (8), l'oxyde de chrome en poudre ayant une grosseur de grains d'au moins 20 µm, en particulier d'au moins 40 µm.

10. Procédé selon la revendication 8, **caractérisé en ce qu'**un bain de fusion (5) est formé sur la surface de la pièce (2) à l'aide du laser (8) et l'oxyde de chrome ou l'oxyde de chrome et le liant en poudre sont chauffés au-dessus de la surface de la pièce (2) à l'aide du laser (8) et introduits ensuite dans le bain de fusion (5), l'oxyde de chrome en poudre présentant en particulier une grosseur de grains de jusqu'à 40 µm, en particulier jusqu'à 25 µm.

11. Procédé selon l'une des revendications 1 à 10, **caractérisé en ce que** des additifs sont ajoutés à l'oxyde de chrome quand il est amené à la surface de la pièce (2) ou avant cela, en particulier des agents antifriction, en particulier dans une proportion de moins de 5 % en poids ou moins de 1 % en poids.

12. Procédé selon l'une des revendications 1 à 11, **caractérisé en ce que** la pièce (1) est fabriquée dans un métal non ferreux, en particulier un matériau à base d'aluminium, de magnésium et/ou de titane.

13. Procédé selon l'une des revendications 1 à 11, **caractérisé en ce que** la pièce (1) est faite d'une matière plastique.

14. Procédé selon l'une des revendications 1 à 6 ou 8 à 13 quand celle-ci ne renvoie pas à la revendication 7, **caractérisé en ce qu'**un bain de fusion (5) dans lequel l'oxyde de chrome est introduit est créé sur la surface de la pièce (2) à l'aide d'un laser picoseconde ayant une durée d'impulsions comprise entre 10⁻⁹ sec et 10⁻¹² sec.
